# EUROPEAN PATENT SPECIFICATION

(11) **EP 0 763 564 B1**
(45) Date of publication and mention of the grant of the patent: **21.03.2001**
(21) Application number: 96202440.2
(22) Date of filing: 02.09.1996
(51) Int. Cl.: C08L 15/00, B60C 1/00

(54) **Elastomeric composition useful for tyre treads**
Kautschukmischung für Reifenlaufflächen
Composition de caoutchouc pour bande de roulement

(30) Priority: 14.09.1995 IT MI951912
(43) Date of publication of application: 19.03.1997
(73) Proprietor: ENICHEM S.p.A., 20124 Milano (IT)
(72) Inventor: Bortolotti, Michele, 48100 Ravenna (IT); Viola, Gian Tommaso, 48015 Cervia, Ravenna (IT); Busetti, Sonia, 20098 San Giulianio Milanese, Milan (IT); Mistrali, Ferruccio, 20126 Milano (IT)
(74) Representative: Fusina, Gerolamo

(56) References cited:
- EP-A- 0 644 235
- DATABASE WPI Section Ch, Week 9522 Derwent Publications Ltd., London, GB; Class A18, AN 95-167343 XP002054240 & JP 07 090 123 A (YOKOHAMA RUBBER CO LTD) , 4 April 1995
- CHEMICAL ABSTRACTS, vol. 121, no. 4, 25 July 1994 Columbus, Ohio, US; abstract no. 37452, T. MURAKI: ""Manufacture of rubber compositions for tire treads with improved wet-skid resistance"" XP002054239 & JP 06 080 786 A (YOKOHAMA RUBBER) 22 March 1994

## Description

The present invention relates to a partially epoxidated elastomeric composition useful for the preparation of tyre treads.

The use of elastomers in the formulation of compounds for tyres, requires the availability of vulcanized products characterized by a low hysteresis for reducing the consumption of fuel.

To obtain good adhesion on wet surfaces and a good abrasion resistance, it is also necessary for the above compounds to be characterized by a suitable hysteretic dissipation at very high frequency stress.

To solve this problem, numerous studies have been carried out on the use of silica as a filler. These studies have given good results in the presence of polar elastomers such as nitrile rubber or chloroprene, in whose presence vulcanized products are obtained characterized by good tensile properties and wear resistance.

On the contrary the use of silica for reinforcing only slightly polar elastomers such as styrene butadiene copolymers or polybutadiene, is hindered by the poor mechanical properties obtained with these elastomers.

Attempts have been made to overcome these drawbacks by using, in the compounding phase, particular organosilanes containing sulfur, the so-called mercaptosilanes (EP-A-447.066). This solution is difficult owing to the cost of these mercaptosilanes and has the disadvantage of the special precautions required for their handling, in situ modification and the vulcanization of the above compounds.

EP-A-0474188 refers to a sulfur cured rubber composition particularly suited for use in tire treads, said composition being composed of, based on 100 parts by weight of rubber, from about 5 to 95 parts by weight of epoxidized rubber; from about 5 to 85 parts by weight of a silica filler; from about 0.5 to 8.5 parts by weight of a silica coupling agent; and 95 to 5 parts by weight of a rubber selected from the group consisting of medium vinyl polybutadiene, styrene-butadiene rubber, synthetic cis-1,4-polyisoprene, synthetic 3,4-polyisoprene, natural rubber, cis-polybutadiene, styrene-isoprene rubber, styrene-isoprene-butadiene rubber, acrylonitrile-butadiene rubber and mixture thereof.

JP 7090123 discloses a mixture based on a SBR copolymer in solution, a SBR copolymer in solution functionalised with N-methyl-pyrrolidone, natural rubber and epoxidised natural rubber, charged with silica and carbon black and cured with the help of "silane coupling agent".

Both the documents disclose the use of silane-based coupling agents.

An elastomeric composition has now been found which can be used for the production of treads for tyres which overcomes the above disadvantages. In fact the preparation of the elastomeric composition of the present invention does not require particular mercaptosilanes.

In accordance with this, the present invention relates to an elastomeric composition vulcanizable with sulfur and/or sulfur donors useful for the preparation of tyre treads which comprises:
a) 100 parts of an elastomeric mixture comprising from 20 to 100% by weight, preferably from 40 to 100% by weight, of an elastomer deriving from the polymerization of a monovinylarene with a conjugated diene, preferably a styrene-butadiene copolymer, the complement to 100 being selected from natural rubber, polybutadiene and other diolefin elastomers;
b) from 10 to 150, preferably from 10 to 80, even more preferably from 30 to 60, parts of silica per 100 parts of (a);
c) from 0 to 150, preferably from 2 to 50, even more preferably from 3 to 30, parts of carbon black per 100 parts of (a) ;
characterized in that the elastomeric mixture (a) has an epoxidation degree, defined by the number of moles of epoxidated double bonds with respect to the initial number of moles of diene double bonds, of between 0.7 and 8.0%, preferably between 1.5 and 6.0%.

The monovinylarene contains from 8 to 20 carbon atoms per molecule and can contain alkyl, cycloalkyl, aryl substituents. Examples of these monovinylarene monomers are: styrene, α-methylstyrene, 3-methylstyrene, 4-n-propylstyrene, 4-cyclohexylstyrene, 4-dodecylstyrene, 2-ethyl-4-benzylstyrene, 4-p-tolylstyrene, 4-(4-phenyl-n-butyl)styrene, 1-vinyl naphthalene, 2-vinyl naphthalene.

In the preferred embodiment styrene is the preferred monovinylarene.

Conjugated dienes useful for the preparation of the monovinylarene/conjugated diene elastomer contain from 4 to 12 carbon atoms per molecule, preferably from 4 to 8.

Examples of these monomers are: 1,3-butadiene, chloroprene, isoprene, 2,3-dimethyl-1,3-butadiene and the relative mixtures. Isoprene and 1,3-butadiene are preferred, 1,3-butadiene is even more preferred.

The weight ratio between vinylarene and conjugated diene is from 10/90 to 40/60.

The preferred monovinylarene - conjugated diene elastomer is the statistic styrene-butadiene copolymer (SBR).

The monovinylarene-conjugated diene elastomer can be produced according to the well known living anionic polymerization technique, using organic compounds of alkaline metals in an inert solvent as initiators. Typical inert solvents are pentane, hexane, cyclohexane, benzene; cyclohexane/hexane mixtures are preferable.

The molecular weight of the above statistic monovinylarene-diene elastomer is between 100,000 and 1,000,000, preferably between 200,000 and 500,000. The Mooney viscosity (ML₁₊₄ at 100°C) is between 20 and 150, lower viscosities giving insufficient wear resistance and higher viscosities causing processability problems.

As polymerization initiators of the conjugated diene or its copolymerization with the monovinylarene, n-butyl Lithium, sec-butyl Lithium, t-butyl Lithium, 1,4-dilithium butane, the reaction product of butyllithium and divinylbenzene, dilithiumalkylene, phenyl lithium, dilithium stilbene, diisopropenyl benzene dilithium, sodium naphthalene, lithium naphthalene, can be used.

In the case of copolymerization, a Lewis base can be used as randomizing agent and regulator of the microstructure of the diene in the copolymer. Typical examples of the above Lewis bases are ethers and tertiary amines, for example dimethoxybenzene, tetrahydrofuran, dimethoxyethane, diethyleneglycoldibutylether, diethyleneglycoldimethylether, triethylamine, pyridine, N-methyl morpholine, N,N,N',N'-tetramethylethylenediamine, 1,2-diperidine ethane.

The content of monovinylarene linked to the polymer is controlled by the quantity of monomer present in the initial mixture, whereas the statistic distribution of the monovinylarene is obained by action of the Lewis base mentioned above, and it is preferable for sequences of monovinylarene containing 10 or more units, to be less than 10% of the weight of the total monovinylarene.

When 1,3-butadiene is used, the content of 1,2 units of butadiene in the copolymer can be controlled by varying the polymerization temperature. In any case the content of vinyl in the copolymer, with reference to the butadiene part, must be within the range of 10 to 70%.

The living polymer can be produced by feeding the monomers, organic solvent, initiator based on organometallic compounds of an alkaline metal, and, if necessary, the Lewis base, into the reactor, in an inert atmosphere. The addition can be carried out in continuous or batch.

The polymerization temperature is usually between -120°C and +150°C, preferably between -80°C and +120°C, and the polymerization time is between 5 minutes and 24 hours, preferably between 10 minutes and 10 hours.

The temperature can be maintained at a constant value within the range indicated or it can be increased by means of a thermostating fluid or the reaction can be carried out under adiabatic conditions and the polymerization process can be in continuous or batch.

The concentration of the monomers in the solvent is usually from 5 to 50% by weight, preferably from 10 to 35% by weight.

In the formation of the living polymer, it is necessary to prevent the presence of deactivating compounds, for example halogenated compounds, oxygen, water, carbon dioxide.

At the end of the polymerization, the reaction mixture is treated with polyfunctional coupling agents such as diphenyl or dialkyl carbonates, divinylbenzene, polyfunctional derivatives of Silicon (for example SiCl₄, trichloromethylsilane, trichlorophenylsilane), preferably with diphenyl or dialkyl carbonates.

Extinguishing agents such as water, alcohols and generally substances having labile hydrogens can also be used.

The above SBR elastomer preferably has a content of linked styrene of between 15 and 40% by weight, preferably between 20 and 30% by weight.

According to the present invention, the elastomeric mixture (a) must contain at least 20% by weight, preferably at least 40% by weight, of monovinylarene conjugated diene elastomer, preferably of statistic styrene butadiene copolymer (SBR).

As specified above, other elastomers can form part of the elastomeric mixture (a). Among these polybutadiene, obtained by polymerization in solution with catalysts of the Ziegler-Natta type or with Lithium catalysts, can be used, the polybutadiene having a vinyl content of between 0.5 and 80%.

In another embodiment of the present invention, the elastomeric mixture (a) consists of from 20 to 50% by weight, preferably from 30 to 40% by weight, of polybutadiene and from 50 to 80%, preferably from 60 to 70% by weight, of statistic styrene-butadiene copolymer having a content of epoxides of between 0.7 and 8.0%.

As well as polybutadiene, other elastomers selected from natural rubber and diene homo- or copolymers can form part of the elastomeric mixture (a). Among the latter it is convenient to mention poly 1,4 cis isoprene, styrene butadiene copolymer polymerized in emulsion, ethylene-propylene-diene terpolymer, chloroprene, butadiene-acrylonitrile copolymer.

With respect to the content of epoxide in the elastomeric mixture (a), this must be between 0.7 and 8%, preferably between 1.5 and 6.0%.

A lower quantity does not show significant advantages, whereas a higher percentage gives vulcanized products poor tensile properties. Moreover a percentage of epoxide higher than that specified leads to an increase in the glass transition temperature of the polymer and therefore its use in tyre compounds will be critical.

The epoxy groups can be contained in any elastomer which forms part of the elastomeric mixture, but it is preferably contained in the monovinylarene-conjugated diene elastomer, even more preferably in the statistic butadiene styrene copolymer (SBR).

The methods for epoxidizing these elastomers are well known to experts in the field; for example the preparation of epoxidated SBR is described in US-A-4.341.672 and in Schulz, Rubber Chemistry & Technology, 55, 809 (1982).

The quantity of silica contained in the elastomeric composition is from 10 to 150 parts, preferably from 10 to 80 parts, even more preferably from 30 to 60 parts, per 100 parts of elastomeric material (a). When the content of silica is less than 10 parts, the reinforcing effect is insufficient and the wear resistance is poor; on the other hand when it exceeds 150 parts by weight, the processability and tensile properties are poor. In the preferred embodiment, the silica has a BET surface of between 100 and 250 m²/g, a CTAB surface of between 100 and 250 m²/g and an oil absorption (DBP) of between 150 and 250 ml/100 g (see EP-A-157.703 for the determination of these measurements).

In addition 0-150 parts of carbon black, preferably from 2 to 50, even more preferably from 3 to 30, can be used as reinforcing charge together with the silica.

The composition consisting of (a) + (b) + (c) can be vulcanized with the usual techniques well known to experts in the field, i.e. with sulfur and/or sulfur donors and accelerating systems (for example zinc oxide, stearic acid and accelerators).

The vulcanized products thus obtained have a better wet grip and an improved hysteresis, as well as good tensile properties and a good wear resistance. These properties make the above vulcanized products suitable for use as treads for tyres.

The composition consisting of (a) + (b) + (c) can also be vulcanized in the presence, in addition to sulfur and/or sulfur donors, of silanes hereunder described.

A further object of the present invention therefore relates to an elastomeric composition for the production of treads for tyres which comprises, in addition to components (a) to (c) specified above, from 0.2 to 15 phr, preferably from 2 to 6 phr, of a silane having general formula (I) Y₃-Si-CₙH₂ₙA, wherein Y is an alkoxide group having from 1 to 4 carbon atoms or a chlorine atom, n is an integer from 1 to 6; A is selected from -SₘCₙH₂ₙSi-Y₃, -X and SmZ, wherein X is selected from a nitrous, mercapto, amino, epoxy, vinyl, imide, chlorine group, Z is selected from 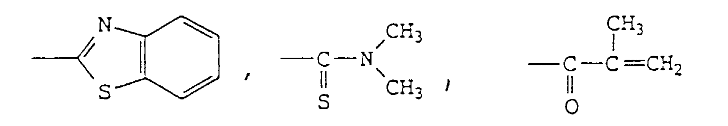 m is an integer from 1 to 6, Y is as defined above.

The addition of the component having general formula (I) allows an improved processability of the mixtures, even if the vulcanized product often has properties similar to those of the vulcanized product without the chemicals having general formula (I).

Typical examples of the above silanes having general formula (I) are:
bis(3-triethoxysilylpropyl)tetrasulfide,
bis(2-triethoxysilylethyl)tetrasulfide,
bis(3-trimethoxypropyl)tetrasulfide,
bis(2-trimethoxysilylethyl)tetrasulfide,
3-mercaptopropyltrimethoxysilane,
3-mercaptopropyltriethoxysilane,
2-mercaptoethyltrimethoxysilane,
2-mercaptoethyltriethoxysilane,
3-nitropropyltrimethoxysilane,
3-nitropropyltriethoxysilane,
3-choropropyltrimethoxysilane, 3-chloropropyl triethoxysilane, 2-chloroethyltriethoxysilane,
3-trimethoxysilylpropyl-N,N-dimethylthiocarbamoyltetrasulfide,
3-trimethoxysilylpropylbenzothiazoletetrasulfide,
3-triethoxysilylpropylmethacrylatemonosulfide, etc.

Among the above components bis(3-triethoxysilylpropyl)tetrasulfide, 3-trimethoxysilylpropylbenzothiazoletetrasulfide are preferred.

Among the components having general formula (I) wherein three different Ys are present, the following should be remembered:
bis(3-diethoxymethylsilylpropyl)tetrasulfide
3-mercaptopropyldimethoxymethylsilane,
3-nitropropyldimethoxymethylsilane,
3-chloropropyldimethoxymethylsilane, dimethoxymethylsilylpropyl-N,N-dimethylthiocarbamoyltetrasulfide, dimethoxymethylsilylpropylbenzothiazoletetrasulfide.

When desired, the above elastomeric composition of the present invention can additionally contain antioxidants, antiozonants, plasticizers, "processing aids", as well as fillers in the form of powders, such as calcium carbonate, silicates, fibrous fillers such as glass fibre, carbon fibres.

The mixtures are prepared preferably using internal mixers, for example of the Banbury type.

It is also preferable to use two-step mixing cycles, the second of which for the addition of the vulcanizing system, optimized to obtain discharging temperatures of between 130 and 170°C, preferably between 140 and 160°C.

The vulcanization temperature is from 130 to 180°C, preferably from 140 to 170°C.

The following examples provide a better illustration of the present invention.

### EXAMPLES

The copolymerization reaction is carried out according to the living polymerization technique according to what is described, for example, by M. Morton in "Anionic Polymerization, Principles and Practice" (Academic Press, New York, 1983).

As far as the epoxidation is concerned, the method of formation of peracid in situ is used, i.e. by directly reacting hydrogen peroxide as oxidant in the presence of a solution of an aliphatic acid, for example formic acid and acetic acid, and the polymeric substrate.

To maximize the yield of epoxide and minimize the opening of the epoxy ring previously formed (hydroxylation reactions), it is preferable not to use drastic temperatures and conditions.

The yield of epoxide is obtained by N.M.R. analyses carried out on the epoxidated polymer after coagulation and drying. The polymer thus isolated is dissolved in CDCl₃ and ⁻H-NMR and ¹³C-NMR scanning is carried out on the above polymeric solution; the ratio between the absorption of the protons relating to the species 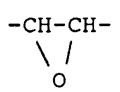 at 2.8 ppm (with relation to the internal standard Me₄Si) and the olefinic ones determines the epoxidation reaction yield (see Pinazzi et al., Bull. Soc. Chem. Franc., 1973, Vol.59, page 1652. or R.V.Gemner and M.A.Golub, J. Pol. Soc., Polymer Chem. Ed. 1978, Vol. 16, page 2985).

The attribution of the percentage of epoxy groups linked to the polymeric chain is confirmed by the presence in the ¹³C-NMR spectrum of signals at about 50 ppm (with relation to the internal standard Me₄Si) characteristic of the species

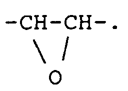

### EXAMPLE 1 - Preparation and vulcanization of Styrene-Butadiene copolymers defined with the initials A1, A2 and A3.

8000 grams of an anhydrous cyclohexane/hexane mixture in a ratio of 9/1 by weight, 64 grams of THF and subsequently 250 grams of Styrene and 750 grams of Butadiene are feed into a stirred 20 litre reactor.

The temperature of the mass is brought to 40°C and 0.64 grams of Lithium n-butyl in cyclohexane are then fed. The beginning of the copolymerization is marked by the increase in temperature; when the maximum of about 80°C has been reached, the solution is left under stirring for 5 minutes; 0.6 grams of diphenylcarbonate in a solution of hexane are then added and the mixture is left under stirring for a further 10 minutes until the coupling reaction of the living chains is completed.

An aliquot (A2, 2,000 grams) of the polymeric solution is transferred to another reactor where it is subjected to epoxidation reaction by the addition of formic acid and hydrogen peroxide with a molar ratio with respect to the double bonds of 15/15/100.

The polymeric solution, to which 21 grams of formic acid have been added, is brought to a temperature of 70°C and 58.6 grams of hydrogen peroxide (30% w/w) are added dropwise over a period of 5 to 30 minutes.

At the end of the addition, the solution is maintained at about 70°C for a time of from 1 to 5 hours.

The epoxidation reaction is completed totally eliminating both the water and the formic acid.

Sodium acetate or sodium bicarbonate is then added in a sufficient quantity to bring the pH to about 7.

2.9 grams of formic acid is added to a second aliquot (A3, 2,000 grams) of the polymeric solution and the temperature is brought to about 70°C. 8.0 grams of hydrogen peroxide (at 30% by weight) are added and the same procedure is adopted as described above.

0.3 phr of BHT (2,6-diterbutyl phenol) are added to the polymeric solutions A1 (this initial refers to the styrene-butadiene copolymer as such), A2 and A3, the mixture is coagulated with isopropyl alcohol and the coagulate is dried in an oven at 60°C for 4 hours.

The characteristics of the polymers A1, A2 and A3 are shown in Table 1, where % Epox. refers to the molar % of epoxidated double bonds with respect to the moles of initial diene double bonds.

GPC analyses of the partially epoxidated polymers A2 and A3 give molecular weight distributions similar to those obtained from the non-epoxidated polymer A1.

Owing to the low content of epoxy groups, the sample A3 does not form part of the present invention and is provided, together with the relative mixture M1-A3, for comparative purposes.

**TABLE 1**

| Copolymer | A1 | A2 | A3 |
|---|---|---|---|
| Styrene % | 25.1 | 25.0 | 25.0 |
| Vinyl % | 47.2 | 50.2 | 50.3 |
| <Mw> | 259,300 | 254,300 | n.d. |
| <Mn> | 209,000 | 211,000 | n.d. |
| Tg | -35°C | -29°C | -35°C |
| % Epox. | 0 | 5 | 0.68 |
| ML₁₋₄ 100°C | 58 | 67 | 54 |

Silica, carbon black, vulcanizing agents and other conventional additives were added to the control sample (A1) and the two copolymers A2 and A3, using a typical tread formulation, provided hereunder.

Styrene butadiene copolymer (SSBR) 100 parts, Cumarone resin 2 phr, Silica VN3 53 phr, Carbon black N330 4.25 phr, bis[3-triethoxysilylpropyl]tetrasulfide (Si69) 4.25 phr, ZnO 2.5 phr, Stearic acid 1.0 phr, Antioxidant 1.0 phr, Microcrystalline wax 1.0 phr, Aromatic oil 6.0 phr, CBS (N-cyclohexyl benzothiazolesulfeneamide) 1 phr, DPG (diphenylguanidine) 1.5 phr, sulfur 1.8 phr.

The compounds were produced using an internal Banbury type laboratory mixer and two-step mixing cycles: the first, for incorporating the charges and Si69, was carried out in a Banbury mixer operating so as to obtain discharge temperatures of between 140 and 160°C; the second, for the addition of the vulcanizing system, was carried out in an open mixer; the total mixing time being 9 minutes.

The test-samples for the determination of the mechanical, dynamic and dynamomechanical properties were vulcanized in a press at 151°C for 60 minutes.

The properties of the vulcanized products are shown in table 2. The tanδ measurements are particularly significant. In fact, it is generally known that the tanδ measurement at a temperature of 60-80°C and strain of between 2 and 5% is indicative of the rolling resistance of the vulcanized mixture, whereas tanδ at about 0°C and low strains (about 0.1%) can instead be correlated with the wet grip.

**TABLE 2**

| Compound | M1-A1 | M1-A2 | M1-A3 |
|---|---|---|---|
| 100% Modulus (MPa) | 4.5 | 5.3 | 4.4 |
| 200% Modulus (MPa) | 8.9 | 11.3 | 9.3 |
| Tensile strength (MPa) | 16.3 | 17.5 | 18.3 |
| Elongation at break (%) | 332 | 282 | 349 |
| Hardness (Shore A) | 78 | 75 | 77 |
| Abrasion loss (mm³) | 136 | 111 | 125 |
| tanδ 1Hz, 0.1% strain, 0°C | 0.127 | 0.247 | 0.126 |
| tanδ 1Hz, 5% strain, 60°C | 0.138 | 0.097 | 0.142 |
| tanδ 1Hz, 10% strain, 60°C | 0.155 | 0.102 | 0.153 |

As can be seen from the data of table 2, the epoxidated copolymer A2 (see compound M1-A2) produces a better interaction with the silica compared to the corresponding non-epoxidated copolymer.

The improvement in the interaction between rubber and filler is shown by the improvement in the abrasion resistance and dynamic properties.

In particular the variation of tanδ with temperature and strain is significant and indicates an improvement in wet grip and in rolling resistance (lower hysteresis).

With respect to the degree of epoxidation useful to obtain an improvement in dynamic properties, it can be noted how the properties of the compound M1-A3 are not significantly different from those of the compound without epoxy groups.

### EXAMPLE 2 - Preparation and vulcanization of Styrene-Butadiene copolymers A4 and A5.

Using a procedure similar to that described in example 1, two styrene-butadiene copolymers are prepared, one non-epoxidated called A4 and the other epoxidated called A5 and derived from the first one.

The two copolymers A4 and A5 have the properties listed in table 3.

**TABLE 3**

| Copolymer | A4 | A5 |
|---|---|---|
| Styrene % | 25.1 | 24.9 |
| Vinyl % | 63.5 | 64.9 |
| <Mw> | 246,800 | 239,400 |
| <Mn> | 191,000 | 180,000 |
| Tg | -21°C | -20°C |
| % Epox. | 0 | 2.27 |
| ML₁₋₄ 100°C | 53 | 53 |

According to the procedure described in example 1, another two compounds are prepared with the two polymers, M1-A4 with the non-epoxidated copolymer A4 and M1-A5 with the partially epoxidated copolymer A5.

The two compounds are vulcanized according to the procedure described above. The properties of the vulcanized products are shown in table 4.

**TABLE 4**

| Compound | M1-A4 | M1-A5 |
|---|---|---|
| 100% Modulus (MPa) | 4.2 | 4.4 |
| 200% Modulus (MPa) | 10.2 | 11.2 |
| Tensile strength (MPa) | 17.0 | 17.5 |
| Elongation at break (%) | 294 | 282 |
| Hardness (Shore A) | 73 | 72 |
| Abrasion loss (mm³) | 153 | 146 |
| tanδ 1Hz, 0.1% strain, 0°C | 0.432 | 0.648 |
| tanδ 1Hz, 5% strain, 80°C | 0.079 | 0.077 |
| tanδ 110 Hz, 6% strain, 80°C | 0.132 | 0.125 |

From the data of table 4 it can be seen that the epoxidated copolymer A5 (compound M1-A5) has improved hysteretic properties (lower tanδ at high frequency conditions, high temperature and strain). In addition the compound has an improved wet grip as shown by the tan δ value at 0°C.

### EXAMPLE 3

The copolymers A1 and A2 described in example 1 are formulated with silica and additives, but without mercaptosilane (compounds M2-A1 and M2-A2); the formulations are shown in table 5 where, for comparative pur-poses, the previous compound M1-A2 obtained from epoxidated copolymer A2 but in the presence of mercaptosilane, is also indicated. In this table the bis[3-triethoxysilylpropyl] tetrasulfide is abbreviated as Si69.

**TABLE 5**

| Compound | M1-A2 | M2-A1 | M2-A2 |
|---|---|---|---|
| Component | (phr) | (phr) | (phr) |
| SSBR | 100.0 | 100.0 | 100.0 |
| Coumarone resin | 2.0 | 2.0 | 2.0 |
| Silica VN3 | 53.0 | 53.0 | 53.0 |
| Carbon black N330 | 4.25 | 4.25 | 4.25 |
| Si69 | 4.25 | 0.00 | 0.00 |
| Zno | 2.5 | 2.5 | 2.5 |
| Stearic acid | 1.0 | 1.0 | 1.0 |
| Antioxidant | 1.5 | 1.5 | 1.5 |
| Wax | 1.0 | 1.0 | 1 |
| Aromatic oil | 6.0 | 6.0 | 6.0 |
| CBS | 1.0 | 1.0 | 1.0 |
| DPG | 1.5 | 1.5 | 1.5 |
| Sulfur | 1.8 | 1.8 | 1.8 |
| TOTAL PHR | 179.8 | 175.55 | m175.55 |

The formulations indicated in table 5 are then subjected to vulcanization under the conditions described in example 1.

The properties of the vulcanized products are shown in table 6.

**TABLE 6**

| Compound | M1-A2 | M2-A1 | M2-A2 |
|---|---|---|---|
| 100% Modulus (MPa) | 5.3 | 2.4 | 4.3 |
| 200% Modulus (MPa) | 11.3 | 4.3 | 10.0 |
| Tensile strength (MPa) | 17.5 | 18.4 | 15.0 |
| Elongation at break (%) | 282 | 634 | 310 |
| Hardness (Shore A) | 75 | 74 | 74 |
| Abrasion loss (mm³) | 111 | 179 | 127 |
| tanδ 1Hz, 0.1% strain, 0°C | 0.247 | 0.109 | 0.250 |
| tanδ 1Hz, 5% strain, 60°C | 0.097 | 0.157 | 0.092 |

It is evident from the data of table 6 that, even without the addition in the formulation of a compatibilizing agent (i.e of the silane in situ modifier of the silica), the epoxidated copolymer A2 has an improved abrasion resistance and hysteresis, the latter similar to that obtained with the compound vulcanized with silane.

### EXAMPLE 4 - Preparation and vulcanization of the styrene-butadiene copolymers called A6, A7 and A8.

Using a procedure similar to that described in example 1, three styrene-butadiene copolymers are prepared, whose characteristics are shown in table 7.

**TABLE 7**

| Copolymer | A6 | A7 | A8 |
|---|---|---|---|
| Styrene % | 19.9 | 19.4 | 20.4 |
| Vinyl % | 67.3 | 71.1 | 74.3 |
| <Mw> | n.d. | n.d. | n.d. |
| <Mn> | n.d. | n.d. | n.d. |
| Tg | -24°C | -19°C | -15°C |
| % Epox. | 0 | 3.63 | 6.3 |
| ML₁₋₄ 100°C | 52 | 54 | 70 |

The above copolymers has been compounded with and without mercaptosilanes according to the formulations indicated in table 8.

**TABLE 8**

| Compound | M1(A6-A7-A8) | M2(A6-A7-A8) |
|---|---|---|
| Component | (phr) | (phr) |
| SSBR | 100.0 | 100.0 |
| Coumarone resin | 2.0 | 2.0 |
| Silica VN3 | 53.0 | 53.0 |
| Carbon black N330 | 4.25 | 4.25 |
| Si69 | 4.25 | 0.00 |
| Zno | 2.5 | 2.5 |
| Stearic acid | 1.0 | 1.0 |
| Antioxidant | 1.5 | 1.5 |
| Wax | 1.0 | 1.0 |
| Aromatic oil | 6.0 | 6.0 |
| CBS | 1.0 | 1.0 |
| DPG | 1.5 | 1.5 |
| Sulfur | 1.8 | 1.8 |
| TOTAL PHR | 179.8 | 175.55 |

The formulations of table 8 were vulcanized under the conditions described in example 1.

The properties of the vulcanized products are indicated in table 9.

**TABLE 9**

| Compound | M1-A6 | M2-A6 | M1-A7 | M2-A7 | M1-A8 | M2-A8 |
|---|---|---|---|---|---|---|
| Mooney visc. | 68 | 121 | 84 | 131 | 95 | 118 |
| 100% Modulus | 3.0 | 2.1 | 3.3 | 2.8 | 3.1 | 3.3 |
| 300% Modulus | 13.5 | 6.7 | -- | 10.8 | -- | -- |
| Tensile stren. | 17.6 | 17.9 | 15.5 | 19.0 | 17.7 | 16.9 |
| Elong. at break | 366 | 606 | 286 | 467 | 277 | 283 |
| Hardness | 69 | 70 | 70 | 71 | 72 | 72 |
| Abrasion loss | 138 | 191 | 134 | 160 | 128 | 127 |

From the data of table 9 it can again be observed how the epoxidation is in itself capable of improving the polymer-silica interaction, as shown by the improvement in the abrasion resistance without mercaptosilane.

The addition of mercaptosilane however has the effect of improving the processability, as shown by the Mooney viscosity of the compound.

### EXAMPLE 5 - Vulcanization of mixtures with polybutadiene.

Silica and conventional additives, except for mercapto-silane (abbreviated Si69), are added to the comparative copolymers A1 and A4 and the partially epoxidated copolymers A2 and A5 with polybutadiene, according to the formulations indicated in table 10.

**TABLE 10**

| Compound | M3-A1 | M3-A2 | M3-A4 | M3-A5 |
|---|---|---|---|---|
| Component | (phr) | (phr) | (phr) | (phr) |
| SSBR | 65.0 | 65.0 | 65.0 | 65.0 |
| Polybut. high cis | 35.0 | 35.0 | 35.0 | 35.0 |
| Coumarone resin | 2.0 | 2.0 | 2.0 | 2.0 |
| Silica VN3 | 53.0 | 53.0 | 53.0 | 53.0 |
| Carbon black N330 | 4.25 | 4.25 | 4.25 | 4.25 |
| Si69 | 0.0 | 0.0 | 0.0 | 0.0 |
| ZnO | 2.5 | 2.5 | 2.5 | 2.5 |
| Stearic acid | 1.0 | 1.0 | 1.0 | 1.0 |
| Antioxidant | 1.5 | 1.5 | 1.5 | 1.5 |
| Wax | 1.0 | 1.0 | 1.0 | 1.0 |
| Aromatic oil | 6.0 | 6.0 | 6.0 | 6.0 |
| CBS | 1.0 | 1.0 | 1.0 | 1.0 |
| DPG | 1.5 | 1.5 | 1.5 | 1.5 |
| Sulfur | 1.8 | 1.8 | 1.8 | 1.8 |
| TOTAL PHR | 175.55 | 175.55 | 175.55 | 175.55 |

After vulcanization under the conditions indicated above, vulcanized products are obtained whose properties are shown in Table 11.

**TABLE 11**

| Compound | M3-A1 | M3-A2 | M3-A4 | M3-A5 |
|---|---|---|---|---|
| Mooney viscosity | 140 | 141 | 139 | 136 |
| 100% Modulus(MPa) | 2.0 | 3.6 | 2.0 | 2.9 |
| 300% Modulus(MPa) | 4.7 | 12.9 | 5.0 | 9.1 |
| Tensile strength (MPa) | 17.8 | 14.2 | 17.7 | 18.3 |
| Elongation at break (%) | 772 | 323 | 732 | 520 |
| Hardness (Shore A) | 75 | 77 | 74 | 77 |
| Abrasion loss (mm³) | 119 | 43 | 119 | 90 |
| tanδ 1Hz, 0.1% strain, 0°C | 0.099 | 0.147 | 0.120 | 0.137 |
| tanδ 1Hz, 5% strain, 60°C | 0.149 | 0.142 | 0.153 | 0.145 |

From the data of table 11 it is evident that the two partially epoxidated polymers (A2 and A5), even without silane as a compatibilizing agent, produce compounds with a good interaction with silica, especially in blends containing polybutadiene.

Consequently the rolling resistance (lower hysteresis), abrasion resistance and wet grip are improved.

## Claims

1. Elastomeric composition vulcanizable with sulfur and/or sulfur donators useful for the preparation of tyre treads which comprises:
a) 100 parts of an elastomeric mixture comprising from 20 to 100% by weight of an elastomer deriving from the polymerization of a monovinylarene with a conjugated diene, the complement to 100 being selected from natural rubber, polybutadiene and other diolefin elastomers;
b) from 10 to 150 parts of silica per 100 parts of (a);
c) from 0 to 150 parts of carbon black per 100 parts of (a);
characterized in that the elastomeric mixture (a) has an epoxidation degree, defined by the number of moles of epoxidated double bonds with respect to the initial number of moles of diene double bonds, of between 0.7 and 8.0%.

2. Elastomeric composition according to claim 1, characterized in that the weight ratio between vinylarene and conjugated diene is from 10/90 to 40/60.

3. Elastomeric composition according to claim 1, characterized in that the elastomeric mixture (a) comprises from 40 to 100% by weight of an elastomer deriving from the polymerization of a monovinylarene with a conjugated diene.

4. Elastomeric composition according to claim 1, characterized in that the elastomer deriving from the polymerization of a monovinylarene with a conjugated diene is the statistic styrene-butadiene copolymer (SBR).

5. Elastomeric composition according to claim 1, characterized in that the elastomeric mixture (a) has a content of epoxides of between 1.5 and 6.0%.

6. Elastomeric composition according to claim 1, wherein the quantity of silica is from 10 to 80 phr and the quantity of carbon black is from 2 to 50 phr.

7. Elastomeric composition according to claim 6, wherein the quantity of silica is from 30 to 60 phr and the quantity of carbon black is from 3 to 30 phr.

8. Elastomeric composition according to claim 1, characterized in that the elastomeric mixture (a) basically consists of the statistic styrene-butadiene copolymer having a content of epoxides of between 0.7 and 8.0%.

9. Elastomeric composition according to claim 8, characterized in that the content of epoxides is from 1.5 to 6.0%.

10. Elastomeric composition according to claim 1, characterized in that the elastomeric mixture (a) consists of 20-50% by weight of polybutadiene and 50-80% by weight of the statistic styrene-butadiene copolymer having a content of epoxides of between 0.7 and 8.0%.

11. Composition according to claim 10, characterized in that the elastomeric mixture (a) consists of 30-40% by weight of polybutadiene and 60-70% by weight of the statistic styrene-butadiene copolymer.

12. Composition according to claim 10, characterized in that the statistic styrene-butadiene copolymer has a content of epoxides of between 1.5 and 6.0%.

13. Elastomeric composition vulcanizable with sulfur and/or sulfur donors useful for the production of tyre treads which comprises:
a) 100 parts of an elastomeric mixture comprising from 20 to 100% by weight, preferably from 40 to 100% by weight, of an elastomer deriving from the polymerization of a monovinylarene with a conjugated diene, preferably a styrene-butadiene copolymer, the complement to 100 being selected from natural rubber, polybutadiene and other diolefin elastomers; the elastomer (a) having an epoxidation degree of between 0.7 and 8%, preferably between 1.5 and 6.0%;
b) from 10 to 150, preferably from 10 to 80, even more preferably from 30 to 60, parts of silica per 100 parts of (a);
c) from 0 to 150, preferably from 2 to 50, even more preferably from 3 to 30, parts of carbon black per 100 parts of (a);
d) from 0.2 to 15 phr of a coupling agent having general formula (I) Y₃-Si-CₙH₂ₙA, wherein Y is an alkoxide group having from 1 to 4 carbon atoms or a chlorine atom, n is an integer from 1 to 6; A is selected from -SₘCₙH₂ₙSi-Y₃, -X and SmZ, wherein X is selected from a nitrous, mercapto, amino, epoxy, vinyl, imide, chlorine group, Z is selected from 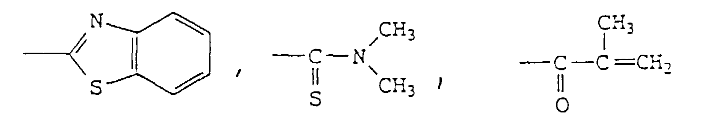 m is an integer from 1 to 6, Y is as defined above.

14. Composition according to claim 13, wherein the component (d) is in a quantity of from 2 to 6 phr.

15. Tyre treads obtained by vulcanizing the elastomeric compositions according to claims 1 to 14, with sulfur and/or sulfur donors in the presence of accelerators and vulcanization additives, at a temperature of between 130 and 180°C.

16. Treads according to claim 15, characterized in that the vulcanization is carried out at a temperature of between 140 and 170°C.

## Patentansprüche

1. Elastomere Masse, die mit Schwefel und/oder Schwefeldonoren vulkanisierbar ist, welche sich zur Herstellung von Reifenlaufflächen eignet, umfassend:
a) 100 Teile einer elastomeren Mischung, umfassend 20 bis 100 Gew.-% eines aus der Polymerisation eines Monovinylarens mit einem konjugierten Dien abgeleiteten Elastomeren, wobei der Rest auf 100 aus natürlichem Kautschuk, Polybutadien und anderen Diolefinelastomeren gewählt ist;
b) 10 bis 150 Teile Silica pro 100 Teile von (a);
c) 0 bis 150 Teile Ruß pro 100 Teile von (a);
dadurch gekennzeichnet, daß die elastomere Mischung (a) einen Epoxidierungsgrad, definiert durch die Anzahl an Mol an epoxidierten Doppelbindungen bezüglich der anfänglichen Zahl an Mol an Dien-Doppelbindungen, von 0,7 bis 8,0 % aufweist.

2. Elastomere Masse gemäß Anspruch 1, dadurch gekennzeichnet, daß das Gewichtsverhältnis zwischen Vinylaren und konjugiertem Dien 10/90 bis 40/60 beträgt.

3. Elastomere Masse gemäß Anspruch 1, dadurch gekennzeichnet, daß die elastomere Mischung (a) 40 bis 100 Gew.-% eines aus der Polymerisation eines Monovinylarens mit einem konjugierten Dien abgeleiteten Elastomeren umfaßt.

4. Elastomere Masse gemäß Anspruch 1, dadurch gekennzeichnet, daß das aus der Polymerisation eines Monovinylarens mit einem konjugierten Dien abgeleitete Elastomer das statistische Styrol-Butadien-Copolymer (SBR) ist.

5. Elastomere Masse gemäß Anspruch 1, dadurch gekennzeichnet, daß die elastomere Mischung (a) einen Gehalt an Epoxiden zwischen 1,5 und 6,0 % aufweist.

6. Elastomere Masse gemäß Anspruch 1, wobei die Menge an Silica 10 bis 80 phr beträgt und die Menge an Ruß 2 bis 50 phr beträgt.

7. Elastomere Masse gemäß Anspruch 6, wobei die Menge an Silica 30 bis 60 phr beträgt und die Menge an Ruß 3 bis 30 phr beträgt.

8. Elastomere Masse gemäß Anspruch 1, dadurch gekennzeichnet, daß die elastomere Mischung (a) im wesentlichen aus dem statistischen Styrol-Butadien-Copolymeren mit einem Gehalt an Epoxiden von 0,7 bis 8,0 % besteht.

9. Elastomere Masse gemäß Anspruch 8, dadurch gekennzeichnet, daß der Gehalt an Epoxiden 1,5 bis 6,0 % beträgt.

10. Elastomere Masse gemäß Anspruch 1, dadurch gekennzeichnet, daß die elastomere Mischung (a) aus 20 - 50 Gew.-% Polybutadien besteht und 50 - 80 Gew.-% des statistischen Styrol-Butadien-Copolymeren einen Gehalt an Epoxiden von 0,7 bis 8,0 % aufweisen.

11. Masse gemäß Anspruch 10, dadurch gekennzeichnet, daß die elastomere Mischung (a) aus 30 - 40 Gew.-% Polybutadien und 60 - 70 Gew.-% des statistischen Styrol-Butadien-Copolymeren besteht.

12. Masse gemäß Anspruch 10, dadurch gekennzeichnet, daß das statistische Styrol-Butadien-Copolymer einen Gehalt an Epoxiden von 1,5 bis 6,0 % aufweist.

13. Elastomere Masse, die mit Schwefel und/oder Schwefeldonoren vulkanisierbar ist, welche sich zur Herstellung von Reifenlaufflächen eignet, umfassend:
a) 100 Teile einer elastomeren Mischung, umfassend 20 bis 100 Gew.-%, vorzugsweise 40 bis 100 Gew.-%, eines aus der Polymerisation eines Monovinylarens mit einem konjugierten Dien abgeleiteten Elastomeren, vorzugsweise eines Styrol-Butadien-Copolymeren, wobei der Rest auf 100 aus natürlichem Kautschuk, Polybutadien und anderen Diolefinelastomeren gewählt ist; wobei das Elastomer (a) einen Epoxidierungsgrad von 0,7 bis 8 %, vorzugsweise zwischen 1,5 und 6,0 %, aufweist;
b) 10 bis 150, vorzugsweise 10 bis 80, noch bevorzugter 30 bis 60 Teile Silica pro 100 Teile von (a);
c) 0 bis 150, vorzugsweise 2 bis 50, noch bevorzugter 3 bis 30 Teile Ruß pro 100 Teile von (a);
d) 0,2 bis 15 phr eines Kopplungsmittels der allgemeinen Formel (I) Y₃-Si-CₙH₂ₙA, worin Y eine Alkoxidgruppe mit 1 bis 4 Kohlenstoffatomen oder ein Chloratom ist, n eine ganze Zahl von 1 bis 6 ist; A gewählt ist aus -SₘCₙH₂ₙSi-Y₃, -X und SmZ, worin X gewählt ist aus einer Stickstoff-, Mercapto-, Amino-, Epoxy-, Vinyl-, Imid-, Chlorgruppe, Z gewählt ist aus 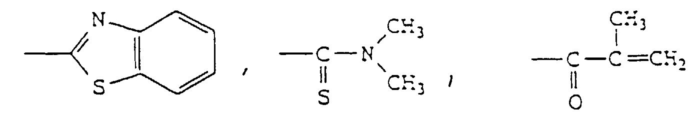 m ist eine ganze Zahl von 1 bis 6, Y ist wie oben definiert.

14. Masse gemäß Anspruch 13, wobei die Komponente (d) in einer Menge von 2 bis 6 phr vorliegt.

15. Reifenlaufflächen, erhalten durch Vulkanisieren der elastomeren Massen gemäß den Ansprüchen 1 bis 14 mit Schwefel und/oder Schwefeldonoren in Gegenwart von Beschleunigern und Vulkanisationsadditiven bei Temperaturen von 130 bis 180°C.

16. Laufflächen gemäß Anspruch 15, dadurch gekennzeichnet, daß die Vulkanisation bei einer Temperatur von 140 bis 170°C durchgeführt wird.

## Revendications

1. Composition élastomère vulcanisable avec le soufre et/ou des donneurs de soufre utile pour la préparation de bandes de roulement de pneumatiques qui comprend :
a) 100 parties d'un mélange élastomère comprenant de 20 à 100 % en masse d'un élastomère issu de la polymérisation d'un monovinylarène avec un diène conjugué, le complément à 100 étant choisi parmi le caoutchouc naturel, le polybutadiène et d'autres élastomères de dioléfines ;
b) de 10 à 150 parties de silice pour 100 parties de (a) ;
c) de 0 à 150 parties de noir de carbone pour 100 parties de (a) ;
caractérisée en ce que le mélange élastomère (a) a un degré d'époxydation, défini par le nombre de moles de doubles liaisons époxydées par rapport au nombre initial de moles de doubles liaisons diéniques, de 0,7 à 8,0 %.

2. Composition élastomère selon la revendication 1 caractérisée en ce que le rapport massique entre le vinylarène et le diène conjugué est de 10/90 à 40/60.

3. Composition élastomère selon la revendication 1 caractérisée en ce que le mélange élastomère (a) comprend de 40 à 100 % en masse d'un élastomère issu de la polymérisation d'un monovinylarène avec un diène conjugué.

4. Composition élastomère selon la revendication 1 caractérisée en ce que l'élastomère issu de la polymérisation d'un monovinylarène avec un diène conjugué est le copolymère styrène-butadiène (SBR) statistique.

5. Composition élastomère selon la revendication 1 caractérisée en ce que le mélange élastomère (a) a une teneur en époxydes de 1,5 à 6,0 %.

6. Composition élastomère selon la revendication 1 où la quantité de silice est de 10 à 80 pcp et la quantité de noir de carbone est de 2 à 50 pcp.

7. Composition élastomère selon la revendication 6 où la quantité de silice est de 30 à 60 pcp et la quantité de noir de carbone est de 3 à 30 pcp.

8. Composition élastomère selon la revendication 1 caractérisée en ce que le mélange élastomère (a) consiste principalement en le copolymère styrène-butadiène statistique ayant une teneur en époxydes de 0,7 à 8,0 %.

9. Composition élastomère selon la revendication 8 caractérisée en ce que la teneur en époxydes est de 1,5 à 6,0 %.

10. Composition élastomère selon la revendication 1 caractérisée en ce que le mélange élastomère (a) consiste en 20-50 % en masse de polybutadiène et 50-80 % en masse de copolymère styrène-butadiène statistique ayant une teneur en époxydes de 0,7 à 8,0 %.

11. Composition selon la revendication 10 caractérisée en ce que le mélange élastomère (a) consiste en 30-40 % en masse de polybutadiène et 60-70 % en masse de copolymère styrène-butadiène statistique.

12. Composition selon la revendication 10 caractérisée en ce que le copolymère styrène-butadiène statistique a une teneur en époxydes de 1,5 à 6,0 %.

13. Composition élastomère vulcanisable avec le soufre et/ou des donneurs de soufre utile pour la production de bandes de roulement de pneumatiques qui comprend :
a) 100 parties d'un mélange élastomère comprenant de 20 à 100 % en masse, de préférence de 40 à 100 % en masse, d'un élastomère issu de la polymérisation d'un monovinylarène avec un diène conjugué, de préférence un copolymère styrène-butadiène, le complément à 100 étant choisi parmi le caoutchouc naturel, le polybutadiène et d'autres élastomères de dioléfines ; l'élastomère (a) ayant un degré d'époxydation de 0,7 à 8 %, de préférence de 1,5 à 6,0 % ;
b) de 10 à 150, de préférence de 10 à 80, de préférence encore de 30 à 60, parties de silice pour 100 parties de (a) ;
c) de 0 à 150, de préférence de 2 à 50, de préférence encore de 3 à 30, parties de noir de carbone pour 100 parties de (a) ;
d) de 0,2 à 15 pcp d'un agent de couplage ayant la formule générale (I) Y₃-Si-CₙH₂ₙA où Y est un groupe alcoxy ayant de 1 à 4 atomes de carbone ou un atome de chlore, n est un entier de 1 à 6 ; A est choisi parmi SₘCₙH₂ₙSi-Y₃,-X et SmZ où X est choisi parmi un groupe nitreux, mercapto, amino, époxy, vinyle, imide, chlore, Z est choisi parmi 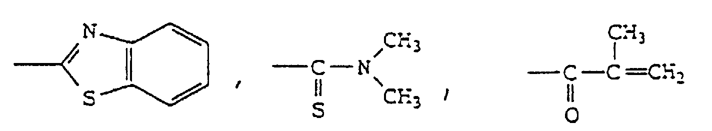
m est un entier de 1 à 6, Y est défini comme ci-dessus.

14. Composition selon la revendication 13 où le composant (d) est présent en une quantité de 2 à 6 pcp.

15. Bandes de roulement de pneumatiques obtenues par vulcanisation des compositions élastomères selon les revendications 1 à 14 avec du soufre et/ou des donneurs de soufre en présence d'accélérateurs et d'additifs de vulcanisation, à une température de 130 à 180°C.

16. Bandes de roulement selon la revendication 15 caractérisées en ce que la vulcanisation est conduite à une température de 140 à 170°C.
